# EUROPEAN PATENT APPLICATION

(11) **EP 4 645 246 A1**
(43) Date of publication of application: **05.11.2025**
(21) Application number: 24275046.1
(22) Date of filing: 02.05.2024
(51) Int. Cl.: G06V 10/143, G06V 10/764, G06V 10/82, G06V 20/10, G06V 20/56

(54) **IMPROVEMENTS IN CLASSIFYING AN OBJECT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present disclosure relates to a computer-implemented method of classifying an object from a real-world environment in which an entity operates. the computer-implemented method comprises: receiving a hyperspectral image of the real-world environment from a hyperspectral camera mounted to the entity; constructing a hyperspectral curve for each pixel of the hyperspectral image; generating an interim image by converting the hyperspectral image to one of a single and a three-channel image based on its hyperspectral curve; and inputting the interim image to a trained image classifier to classify an object from the real-world environment

## Description

### FIELD OF THE INVENTION

The present invention relates to methods of classifying objects.

### BACKGROUND

Typically, to classify an object, a camera captures an image. The image is input to an image classifier, typically a trained neural network classifier. The neural network classifier is trained to classify an object in the image by pairing images of objects and labels of classifications of the objects.

It is an aim of the present disclosure to improve on the prior art.

### SUMMARY

Embodiments of the present invention are intended to address the above technical problems.

According to an aspect of the present invention, there is provided a computer-implemented method of classifying an object from a real-world environment in which an entity operates, the computer-implemented method comprising: receiving a hyperspectral image of the real-world environment from a hyperspectral camera mounted to the entity; constructing a hyperspectral curve for each pixel of the hyperspectral image; generating an interim image by converting the hyperspectral image to one of a single and a three-channel image based on its hyperspectral curve; and inputting the interim image to a trained image classifier to classify an object from the real-world environment. Hyperspectral images can discern different materials of features. The interim image includes this material information coded into one or three channels. The trained image classifier can then classify objects and take into account their materials. This is important for instances where, for example, objects have the same colour as their background but have different materials. Another case where this method is advantageous is, for example, when trying to determine if an object is present or an image of an object, e.g. a human versus a cardboard cutout of the human.

In an embodiment, constructing a hyperspectral curve for each pixel of the hyperspectral image comprises: dividing the hyperspectral curve of each pixel into three frequency ranges, wherein the three frequency ranges include an infrared range, a visible light range, and an ultraviolet range.

In an embodiment, the interim image is a three-channel image, wherein generating the interim image by converting the hyperspectral image to the three-channel image based on its hyperspectral curve comprises, for each pixel: identifying a dominant frequency in each frequency range; setting a brightness level of a first channel of the three channels of the pixel based on an intensity of the identified dominant frequency in the infrared range; setting a brightness level of a second channel of the three channels of the pixel based on an intensity of the identified dominant frequency in the visible range; and setting a brightness level of a third channel of the three channels of the pixels based on an intensity of the identified dominant frequency in the ultraviolet range.

In an embodiment, the interim image is a three-channel image, wherein generating the interim image by converting the hyperspectral image to the three-channel image based on its hyperspectral curve comprises, for each pixel: identifying a dominant frequency in each frequency range; setting a brightness level of a first channel of the three channels of the pixel based on a frequency of the identified dominant frequency in the infrared range; setting a brightness level of a second channel of the three channels of the pixel based on a frequency of the identified dominant frequency in the visible range; and setting a brightness level of a third channel of the three channels of the pixels based on a frequency of the identified dominant frequency in the ultraviolet range.

In an embodiment, the interim image is a three-channel image, wherein generating the interim image by converting the hyperspectral image to the three-channel image based on its hyperspectral curve comprises, for each pixel: identifying a dominant frequency in each frequency range; setting a brightness level of a first channel of the three channels of the pixel based on a frequency of the identified dominant frequency and an intensity of the dominant frequency in the infrared range; setting a brightness level of a second channel of the three channels of the pixel based on a frequency of the identified dominant frequency and an intensity of the dominant frequency in the visible range; and setting a brightness level of a third channel of the three channels of the pixels based on a frequency of the identified dominant frequency and an intensity of the dominant frequency in the ultraviolet range

In an embodiment, the first channel is a red colour channel, the second channel is a green colour channel, and the third channel is a blue colour channel.

In an embodiment, the interim image is a single channel image, wherein generating an interim image by converting the hyperspectral image to the single channel image based on its hyperspectral curve comprises: identifying a dominant frequency across the hyperspectral curve; and setting a brightness level of the pixel based on a frequency of the identified dominant frequency.

In an embodiment, setting the brightness level of the pixel is also based on an intensity of the identified dominant frequency.

In an embodiment, the brightness level is normalised between 0 for a dominant frequency corresponding to a highest ultraviolet frequency, and 1 for a dominant frequency corresponding to a lowest infrared frequency.

In an embodiment, the brightness level of 0 is black and the brightness level of 1 is white.

In an embodiment, identifying the dominant frequency comprises: identifying a frequency having a highest intensity.

In an embodiment, identifying the dominant frequency comprises: inputting the hyperspectral curve into a classifier trained to identify a dominant frequency.

In an embodiment, the trained classifier includes at least one convolutional neural network.

In an embodiment, the entity is a military vehicle.

According to an aspect of the present disclosure, there is provided a computer-implemented method of operating an autonomous system of an entity, the computer-implemented method comprising: classifying an object using the computer-implemented method of any preceding aspect or embodiment; determining an operation plan for the autonomous system based on the classified object; and operating the autonomous system using the operation plan.

According to an aspect of the present disclosure, there is provided a computer-implemented method of generating training data to train an image classifier, the computer-implemented method comprising: receiving a hyperspectral image of the real-world environment from a hyperspectral camera mounted to the entity; constructing a hyperspectral curve for each pixel of the hyperspectral image; generating an interim image by converting the hyperspectral image to one of a single and a three-channel image based on its hyperspectral curve; and pairing the interim image with at least one label of an object in the interim image.

According to an aspect of the present disclosure, there is provided a computer-implemented method of training an image classifier, the computer-implemented method comprising: receiving training data generated using the computer-implemented method of any preceding aspect or embodiment; inputting the interim image to a trained image classifier to predict a classification an object in the interim image; and adjusting weights of the image classifier to reduce an error between the predicted classification and the expected classification.

According to an aspect of the present disclosure, there is provided a transitory, or non-transitory, computer-readable medium, having instructions stored thereon that when executed by at least one processor, cause the at least one processor to perform the computer-implemented method of any preceding aspect or embodiment.

According to an aspect of the present disclosure, there is provided an entity, comprising: a hyperspectral camera mounted to a body of the entity; an autonomous system; and at least one processor; and storage having instructions stored thereon that when executed by the at least one processor cause the at least one processor to perform the computer-implemented method of operating an autonomous system of an entity according to any preceding aspect or embodiment.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 shows a schematic block diagram of an entity, according to at least one embodiment;
Figure 2 shows a hyperspectral image of a real-world environment in which the entity operates;
Figure 3 shows an interim image derived from the hyperspectral image of Figure 2;
Figure 4 shows a hyperspectral signature from a pixel of the hyperspectral image;
Figure 5 shows a flow chart summarising a computer-implemented method of training an image classifier to classify objects using an interim image from Figure 3, according to at least one embodiment;
Figure 6 shows a flow chart summarising a computer-implemented method of generating training data to train the image classifier, according to at least one embodiment;
Figure 7 shows a flow chart summarising a computer-implemented method of classifying an object from a real-world environment in which an entity operates, according to at least one embodiment; and
Figure 8 shows a flow chart summarising a computer-implemented method of controlling an autonomous system of an entity to move, according to one or more embodiments.

### DETAILED DESCRIPTION

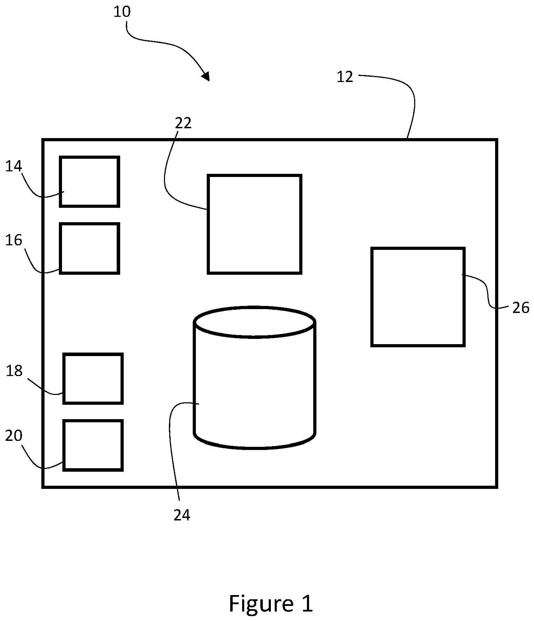

With reference to Figure 1, an entity 10 comprises a body 12, a first camera 14, a second camera 16, a first hyperspectral camera 18, a second hyperspectral camera 20, a processor 22, storage 24, and an autonomous system 26.

The entity may be a military vehicle. The military vehicle may be a tank or other armored vehicle, for example.

The first camera 14 and the second camera 16 are red, green, and blue, (RGB) cameras. A separation distance between the first and second cameras 14, 16, is known. The orientations of the first and second cameras 14, 16, is known. A separation distance between the first and second hyperspectral cameras 18, 20, is known. The orientations of the first and second hyperspectral cameras 18, 20, is known. The first and second cameras 14, 16, are each configured to capture an image, where the image is an RGB image or a grayscale image. In other words, the image is one of a three-channel image and a single channel image. The first and second hyperspectral cameras 16, 18,

The storage 24 may be non-transitory computer readable media. The storage 24 may have instructions stored thereon that when executed by the processor 22 cause the processor to perform any of the computer-implemented methods (which may be called methods herein) described herein.

The autonomous system 26 may be any system that may move autonomously based on the images or hyperspectral images. The autonomous system 26 may be an autonomous driving system when the entity is an autonomous vehicle. Alternatively, the autonomous system may be a robot arm or other robot system configured to move in the real-world environment.

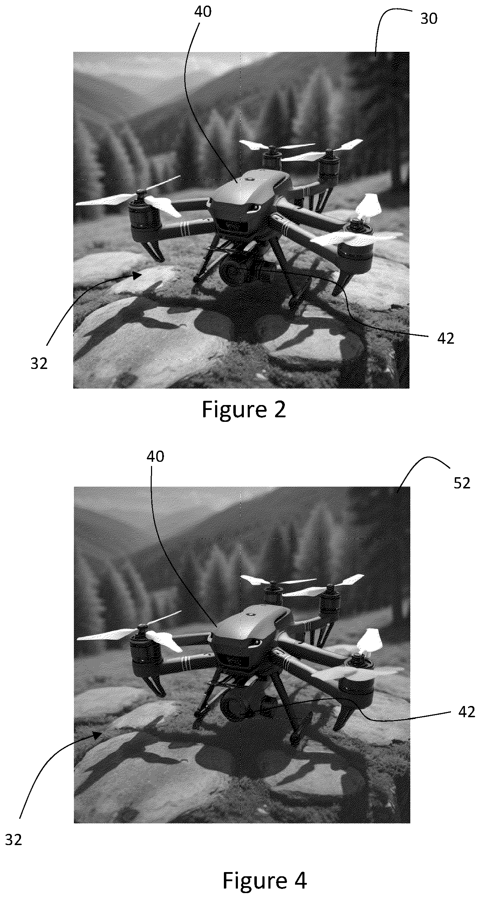

With reference to Figure 2, the method comprises receiving a hyperspectral image 30 of the real-world environment from one of the first and second hyperspectral cameras 18, 20. The hyperspectral image 30 shows an object 32, namely a drone. The drone has a body 40 and sensors 42. The sensors include lenses made from a glass material, and the body may be made out of a plastic or metal material.

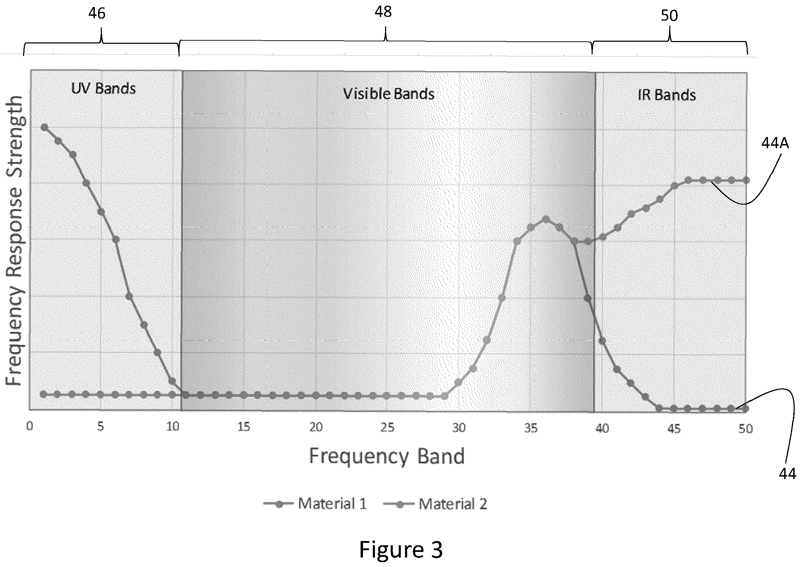

With reference to Figure 3, for each pixel of the hyperspectral image 30, the method comprises constructing a hyperspectral curve, or hyperspectral signature, 44. Constructing the hyperspectral curve for each pixel of the hyperspectral image comprises dividing the hyperspectral curve into three frequency ranges. The three frequency ranges include an ultraviolet, UV, range 46, a visible light range 48, and an infrared, IR, range 50.

With reference to Figure 3, the hyperspectral curve 44 represents an object which has an orange colour in the visible light range. Therefore, the intensity of the curve peaks between red and yellow frequencies. The hyperspectral curve is a further peak in the UV range 46. A further hyperspectral curve 44A represents an object which has the same orange colour as the object of the hyperspectral curve 44. However, the object of the further hyperspectral curve is made from a different material and so does not have a peak in the UV range 46 but has a peak in the IR range 50 instead. For example, the material of the object of the hyperspectral curve 44 may be a plastic material, for example. The material of the object of the further hyperspectral curve 44A may be a glass material, for example.

With reference to Figure 4, the method comprises generating an interim image 52 by converting the hyperspectral image 30 into one of a single and a three-channel image based on its hyperspectral curve. The single channel image may be a grayscale image. The three-channel image is an RGB image, where a first channel is red, a second channel is green, and a third channel is blue. To convert the hyperspectral image 30 into the interim RGB image 52, the method comprises, for each pixel, identifying a dominant frequency in each frequency range. Dominant may be taken to mean a frequency having the highest intensity, also termed a response strength herein. So, the highest intensity frequency in each of the UV range (or band) 46, the visible range (or band) 48, and the IR range (or band) 50, is identified. Then, the method comprises setting a brightness level of the red channel of the pixel based on the intensity of the identified dominant frequency in the infrared range 50. Similarly, the method comprises setting a brightness level of a green channel of the pixel based on the intensity of the identified dominant frequency in the visible light range 48. Further, the method comprises setting a brightness level of the blue channel of the pixel based on the intensity of the identified dominant frequency in the UV range 46. It may be appreciated that in a typical RGB display there are usually three sub-pixels per pixel. The three sub-pixels include a red sub-pixel, a green sub-pixel, and a blue sub-pixel. Setting the brightness level of the respective channel may be achieved by setting the brightness level of the respective sub-pixel. The brightness level may be set using a plurality of brightness levels between 0, for no brightness, e.g. black, and 255 for full brightness, e.g. full red, green, or blue.

In another embodiment, the method may instead comprise setting the brightness level of the respective channel based on a frequency of the identified dominant frequency in each frequency range. More specifically, the method may comprise: setting a brightness level of a first channel of the three channels of the pixel based on a frequency of the identified dominant frequency in the infrared range; setting a brightness level of a second channel of the three channels of the pixel based on a frequency of the identified dominant frequency in the visible range; and setting a brightness level of a third channel of the three channels of the pixels based on a frequency of the identified dominant frequency in the ultraviolet range. The dominant frequency is identified in the same way as above. The dominant frequency is used to set the brightness level by setting the brightness level between 0 and 255 of the respective sub-pixel.

In another embodiment, the method may instead comprise setting the brightness level of the respective channel based on a frequency of the identified dominant frequency and an intensity of the dominant frequency in the each frequency range. More specifically, the method may comprise: setting a brightness level of a first channel of the three channels of the pixel based on a frequency of the identified dominant frequency and an intensity of the dominant frequency in the infrared range; setting a brightness level of a second channel of the three channels of the pixel based on a frequency of the identified dominant frequency and an intensity of the dominant frequency in the visible range; and setting a brightness level of a third channel of the three channels of the pixels based on a frequency of the identified dominant frequency and an intensity of the dominant frequency in the ultraviolet range. The dominant frequency is identified in the same way as above. The dominant frequency and its intensity are used to set the brightness level by setting the brightness level between 0 and 255 of the respective sub-pixel.

In another embodiment, the interim image may be a single channel image, e.g. a grayscale image. The step of generating the interim image by converting the hyperspectral image to the single channel image based on its hyperspectral curve comprises: identifying a dominant frequency across the hyperspectral curve; and setting a brightness level of the pixel based on a frequency of the identified dominant frequency. The dominant frequency is determined in the same way as above. However, in this embodiment, the dominant frequency is identified for the entire curve 44 rather than for each frequency range. The brightness level may also be set based on the intensity of the identified dominant frequency.

To set the brightness level, the brightness level is normalized between 0 and 1. 0 is used for a dominant frequency corresponding to a highest ultraviolet frequency. 1 is used for a dominant frequency corresponding to a lowest IR frequency. The brightness level may be between 0 for black and 1 for white. This may correspond to the conventional pixel brightness levels of between 0 and 255, respectively.

The foregoing embodiments describe identifying the dominant frequency as the one with the highest intensity. This may be obtained in various ways. For example, a rules-based algorithm stored in the storage may be used to identify the frequency with the highest intensity. Alternatively, the hyperspectral curve 44 (Figure 3) may be input to a trained classifier. The classifier may be trained using training data including hyperspectral curves as inputs and corresponding labels of classifications as outputs. The labels of classifications may describe the dominant frequency and its intensity in one or more range, or across the entire curve. Training may use backpropagation and an optimization algorithm such as gradient descent, or the like. The trained classifier includes at least one convolutional neural network.

Once the interim image 30 has been generated, the method comprises classifying an object in the interim image. This can be achieved using a trained image classifier. The trained image classifier may be a neural network, and preferably a convolutional neural network.

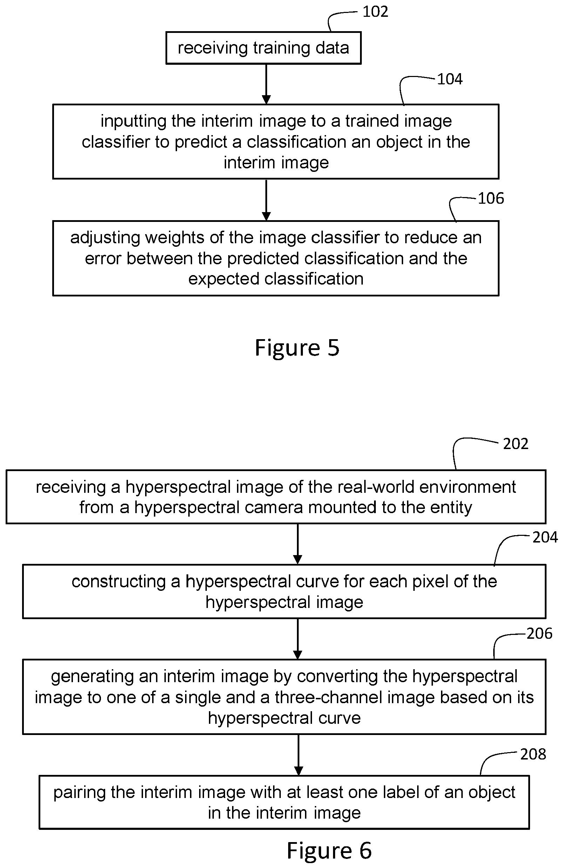

With reference to Figure 5, the method of training the image classifier may be summarized as comprising: receiving 102 training data; inputting 104 the interim image to a trained image classifier to predict a classification an object in the interim image; and adjusting 106 weights of the image classifier to reduce an error between the predicted classification and the expected classification. The weights may be adjusted using conventional training algorithms such as backpropagation and an optimization algorithm such as gradient descent.

The training data may be generated using a different method.

With reference to Figure 6, the method of generating the training data to train the image classifier may be summarized as comprising: receiving 202 a hyperspectral image of the real-world environment from a hyperspectral camera mounted to the entity; constructing 204 a hyperspectral curve for each pixel of the hyperspectral image; generating 206 an interim image by converting the hyperspectral image to one of a single and a three-channel image based on its hyperspectral curve; and pairing 208 the interim image with at least one label of an object in the interim image. The pairing may be done automatically using a machine learning algorithm.

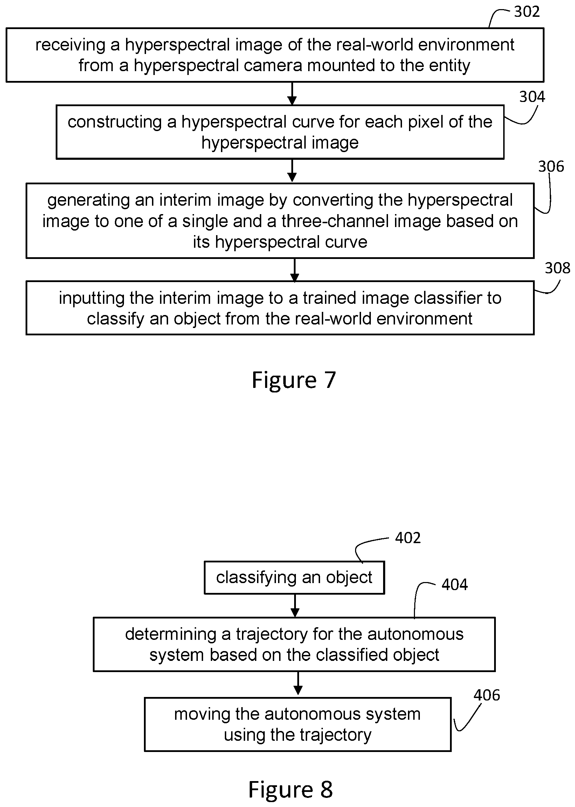

With reference to Figure 7, once the image classifier has been trained, the method of classifying the object from the real-world environment in which the entity operates may be summarized as comprising: receiving 302 a hyperspectral image of the real-world environment from a hyperspectral camera mounted to the entity; constructing 304 a hyperspectral curve for each pixel of the hyperspectral image; generating 306 an interim image by converting the hyperspectral image to one of a single and a three-channel image based on its hyperspectral curve; and inputting 308 the interim image to a trained image classifier to classify an object from the real-world environment. The classifications may include multiple classes. For example, the classifications may be able to classify humans, animals, vehicles, etc. To achieve this a softmax layer, or similar, may be used in the trained classifier. The softmax layer provides a probability distribution such that each possible object has a probability of being true. The classification with the highest probability, and optionally, above a threshold probability, may be taken to be the correct classification.

Once the object has been classified, the autonomous system of the entity may be configured to move. For example, a further neural network, e.g. an end-to-end neural network may be employed to take the classified objects, plus positional data associated with the entity, and/or the autonomous system, and move the autonomous system based on the object and optionally its position.

With reference to Figure 8, the method of operating the autonomous system of the entity may comprise: classifying 402 an object; determining an operation plan for the autonomous system based on the classified object 404; and operating the autonomous system using the operation plan 406. As above, the autonomous system may be a driving system in which case the operation plan may be a trajectory. When the autonomous system is a system that does not move, e.g. an automated indication system, the operation plan may be a plan to operate the autonomous system, e.g. to indicate a warning automatically.

In other embodiments, a signal indicating the object classification can be sent to a display device, or similar. This information can then be assessed by a human operator. The human operator will be able to discern more information using the present methods because material information will be taken into account when classifying the objects rather than just their visible appearance using techniques such as edge detection. In this way, objects that may be visibly hidden, can be observed. In a military scenario this may be particularly important where objects may be camouflaged to visibly conceal them, yet the material from which they are made may make them detectable using the present methods.

## Claims

1. A computer-implemented method of classifying an object from a real-world environment in which an entity operates, the computer-implemented method comprising:
receiving a hyperspectral image of the real-world environment from a hyperspectral camera mounted to the entity;
constructing a hyperspectral curve for each pixel of the hyperspectral image;
generating an interim image by converting the hyperspectral image to one of a single and a three-channel image based on its hyperspectral curve; and
inputting the interim image to a trained image classifier to classify an object from the real-world environment.

2. The computer-implemented method of Claim 1, wherein constructing a hyperspectral curve for each pixel of the hyperspectral image comprises:
dividing the hyperspectral curve of each pixel into three frequency ranges,
wherein the three frequency ranges include an infrared range, a visible light range, and an ultraviolet range.

3. The computer-implemented method of Claim 2, wherein the interim image is a three-channel image, wherein generating the interim image by converting the hyperspectral image to the three-channel image based on its hyperspectral curve comprises, for each pixel:
identifying a dominant frequency in each frequency range;
setting a brightness level of a first channel of the three channels of the pixel based on an intensity of the identified dominant frequency in the infrared range;
setting a brightness level of a second channel of the three channels of the pixel based on an intensity of the identified dominant frequency in the visible range; and
setting a brightness level of a third channel of the three channels of the pixels based on an intensity of the identified dominant frequency in the ultraviolet range.

4. The computer-implemented method of Claim 2, wherein the interim image is a three-channel image, wherein generating the interim image by converting the hyperspectral image to the three-channel image based on its hyperspectral curve comprises, for each pixel:
identifying a dominant frequency in each frequency range;
setting a brightness level of a first channel of the three channels of the pixel based on a frequency of the identified dominant frequency in the infrared range;
setting a brightness level of a second channel of the three channels of the pixel based on a frequency of the identified dominant frequency in the visible range; and
setting a brightness level of a third channel of the three channels of the pixels based on a frequency of the identified dominant frequency in the ultraviolet range.

5. The computer-implemented method of Claim 2, wherein the interim image is a three-channel image, wherein generating the interim image by converting the hyperspectral image to the three-channel image based on its hyperspectral curve comprises, for each pixel:
identifying a dominant frequency in each frequency range;
setting a brightness level of a first channel of the three channels of the pixel based on a frequency of the identified dominant frequency and an intensity of the dominant frequency in the infrared range;
setting a brightness level of a second channel of the three channels of the pixel based on a frequency of the identified dominant frequency and an intensity of the dominant frequency in the visible range; and
setting a brightness level of a third channel of the three channels of the pixels based on a frequency of the identified dominant frequency and an intensity of the dominant frequency in the ultraviolet range

6. The computer-implemented method of any of Claims 3 to 5, wherein the first channel is a red colour channel, the second channel is a green colour channel, and the third channel is a blue colour channel.

7. The computer-implemented method of Claim 1 or Claim 2, wherein the interim image is a single channel image, wherein generating an interim image by converting the hyperspectral image to the single channel image based on its hyperspectral curve comprises:
identifying a dominant frequency across the hyperspectral curve; and
setting a brightness level of the pixel based on a frequency of the identified dominant frequency.

8. The computer-implemented method of Claim 7, wherein setting the brightness level of the pixel is also based on an intensity of the identified dominant frequency.

9. The computer-implemented method of either of Claims 7 or 8 when dependent upon Claim 2, wherein the brightness level is normalised between 0 for a dominant frequency corresponding to a highest ultraviolet frequency, and 1 for a dominant frequency corresponding to a lowest infrared frequency.

10. The computer-implemented method of Claim 9, wherein the brightness level of 0 is black and the brightness level of 1 is white.

11. The computer-implemented method of any of Claims 3 to 10, wherein identifying the dominant frequency comprises:
identifying a frequency having a highest intensity.

12. The computer-implemented method of any of Claims 3 to 11, wherein identifying the dominant frequency comprises:
inputting the hyperspectral curve into a classifier trained to identify a dominant frequency.

13. The computer-implemented method of any preceding claim, wherein the trained classifier includes at least one convolutional neural network.

14. The computer-implemented method of any preceding claim, wherein the entity is a military vehicle.

15. A computer-implemented method of operating an autonomous system of an entity, the computer-implemented method comprising:
classifying an object using the computer-implemented method of any preceding claim;
determining an operation plan for the autonomous system based on the classified object; and
operating the autonomous system using the operation plan.

16. A computer-implemented method of generating training data to train an classifier, the computer-implemented method comprising:
receiving a hyperspectral image of the real-world environment from a hyperspectral camera mounted to the entity;
constructing a hyperspectral curve for each pixel of the hyperspectral image;
generating an interim image by converting the hyperspectral image to one of a single and a three-channel image based on its hyperspectral curve; and
pairing the interim image with at least one label of an object in the interim image.

17. An entity, comprising:
a hyperspectral camera mounted to a body of the entity;
an autonomous system; and
at least one processor; and
storage having instructions stored thereon that when executed by the at least one processor cause the at least one processor to perform the computer-implemented method of operating an autonomous system of an entity according to Claim 15

18. A computer-implemented method of training a classifier, the computer-implemented method comprising:
receiving training data generated using the computer-implemented method of Claim 16;
inputting the interim image to a trained image classifier to predict a classification an object in the interim image; and
adjusting weights of the image classifier to reduce an error between the predicted classification and the expected classification.

19. A transitory, or non-transitory, computer-readable medium, having instructions stored thereon that when executed by at least one processor, cause the at least one processor to perform the computer-implemented method of any preceding claim.
